# EUROPÄISCHE PATENTSCHRIFT

(11) **EP 2 686 112 B1**
(45) Veröffentlichungstag und Bekanntmachung des Hinweises auf die Patenterteilung: **20.04.2016**
(21) Anmeldenummer: 12705305.6
(22) Anmeldetag: 22.02.2012
(51) Int. Cl.: B05B 11/00, G01F 11/02

(54) **AUSTRAGVORRICHTUNG**
DISCHARGING DEVICE
DISPOSITIF DISTRIBUTEUR

(30) Priorität: 18.03.2011 DE 102011005820
(43) Veröffentlichungstag der Anmeldung: 22.01.2014
(73) Patentinhaber: Aptar Radolfzell GmbH, 78315 Radolfzell (DE)
(72) Erfinder: GREINER-PERTH, Jürgen, 78244 Gottmadingen (DE); WOCHELE, Matthias, 78239 Rielasingen-Worblingen (DE); AUERBACH, Judith, 06846 Dessau (DE)
(74) Vertreter: Patentanwaltskanzlei Cartagena
(86) Internationale Anmeldenummer: PCT/EP2012/053024
(87) Internationale Veröffentlichungsnummer: WO 2012/126692

(56) Entgegenhaltungen:
- WO-A1-91/13689
- DE-T2-602004 000 369
- US-A- 6 164 498

## Beschreibung

Die Erfindung betrifft einen Spender zum Austragen von Flüssigkeiten mit einem Flüssigkeitsspeicher zur Aufnahme der Flüssigkeit vor dem Austrag und mit einem zu einer Flüssigkeitsaustrittsöffnung führenden Flüssigkeitsaustrittskanal, durch den der Flüssigkeitsspeicher mit einer Umgebungsatmosphäre verbunden ist. Dabei ist bei einem gattungsgemäßen Spender vorgesehen, dass dieser zur Benutzung in einer Nutzlage ausgebildet ist, in der die Flüssigkeitsaustrittsöffnung unterhalb des Flüssigkeitsspeichers angeordnet ist, so dass diese durch ihre Gewichtskraft in Richtung der Flüssigkeitsaustrittöffnung fließt. Weiterhin ist bei gattungsgemäßen Austragvorrichtungen vorgesehen, dass der Flüssigkeitsaustrittskanal derart ausgebildet ist, dass er zumindest in der Nutzlage nicht gleichzeitig ein Eintreten von Luft in den Flüssigkeitsspeicher und ein Austreten von Flüssigkeit in die Umgebungsatmosphäre gestattet.

Spender für Flüssigkeiten sind für pharmazeutische und kosmetische Anwendungen allgemein bekannt. Der vorliegende Spender ist insbesondere als Spender für pharmazeutische Flüssigkeiten wie beispielsweise Hustensaft oder dergleichen vorgesehen.

Die Besonderheit gattungsgemäßer Spender, bekannt aus US 6164498 A, liegt darin, dass zwischen dem Flüssigkeitsspeicher und der Flüssigkeitsaustrittsöffnung keine Ventile vorgesehen sind, sondern der Flüssigkeitsaustritt dadurch limitiert ist, dass durch den Flüssigkeitsaustrittskanal aufgrund seiner Dimensionierung nicht gleichzeitig Flüssigkeit austreten und Luft eintreten kann. Wenn der Spender somit in seine Nutzlage gebracht wird, so entweicht zunächst nur so lange Flüssigkeit durch die unterhalb des Flüssigkeitsspiegels gelegene Flüssigkeitsaustrittsöffnung, solange der sich dadurch im Flüssigkeitsspeicher einstellende Unterdruck dies nicht verhindert. Der Flüssigkeitsaustrittskanal ist so geartet, dass er ein Nachströmen von Luft in Reaktion auf den Unterdruck, der beim Überführen des Spenders in seine Nutzlage sich einstellt, nicht gestattet.

Gattungsgemäße Spender sind zum Beispiel als so genannte "Squeeze-Bottles" (Quetschflaschen) bekannt. Bei diesen kann der Flüssigkeitsspeicher als Ganzes aufgrund flexibler Außenwandungen zusammengedrückt werden. Hierdurch wird der sich im Flüssigkeitsspeicher einstellende Unterdruck kompensiert bzw. ein Überdruck im Flüssigkeitsspeicher erzeugt, durch den eine weitere Flüssigkeitsmenge in der Nutzlage durch die Flüssigkeitsaustrittsöffnung hinausströmt.

Die Flüssigkeitsmenge, die vom Spender im Zuge eines Austragvorgangs abgegeben wird, ist bei "Squeeze-Bottles" schwer zu steuern. Die Volumenreduzierung des Flüssigkeitsspeichers ist aufgrund der flexiblen Wandungen sehr von der aufgewendeten Kraft des Benutzers abhängig.

### Aufgabe und Lösung

Die Aufgabe der Erfindung liegt daher darin, einen gattungsgemäßen Spender dahingehend weiterzubilden, dass dieser auf einfache Art und Weise eine recht präzise wiederholbare Flüssigkeitsmenge austrägt.

Erfindungsgemäß ist hierzu vorgesehen, dass zur Reduzierung des Innenvolumens des Spenders und damit zur Bewirkung eines Flüssigkeitsaustrags ein in einer Betätigungsrichtung manuell von einer Hubausgangslage bis in eine Hubendlage einschiebbarer Schieber vorgesehen ist.

Ein erfindungsgemäßer Spender weist somit zunächst die Merkmale des gattungsbildenden Spenders auf. So verfügt er über einen Flüssigkeitsspeicher, dessen Wandungen weitgehend unverformbar sind oder zumindest beim bestimmungsgemäßen Austragvorgang nicht verformt werden müssen. Dieser Flüssigkeitsspeicher ist durch einen Flüssigkeitsaustrittskanal mit einer endseitig vorgesehenen Flüssigkeitsaustrittsöffnung mit einer umgebenden Atmosphäre verbunden. Während der bestimmungsgemäßen Nutzung des Spenders in einer Überkopflage, in der die Flüssigkeitsaustrittsöffnung unterhalb des Flüssigkeitsspiegels im Flüssigkeitsspeicher liegt, ist der Flüssigkeitsspeicher selbst und nicht nur eine Pumpkammer oder dergleichen über diesen Flüssigkeitsaustrittskanal mit der Umgebung verbunden. Damit nicht ohne weiteres Zutun hierdurch ein vollständiger Austrag der im Flüssigkeitsspeicher vorrätigen Flüssigkeit erfolgt, ist der Flüssigkeitskanal so ausgebildet, dass er in der Überkopflage ein Nachströmen von Luft durch die in ihm befindliche oder an ihm anliegende Flüssigkeit verhindert. Wenn der Spender somit aus einer von der Nutzlage abweichenden Lage, insbesondere einer Lage, in der die Austrittsöffnung am oberen Ende vorgesehen ist, in die Nutzlage überführt wird, wird somit nur eine geringe Menge Flüssigkeit ausgetragen. Der Austrag endet zunächst, sobald der sich im Flüssigkeitsspeicher einstellende Unterdruck und die Gewichtskraft der Flüssigkeit sich am Flüssigkeitsaustrittskanal die Waage halten. Unter dem nicht gleichzeitigen Einströmen von Luft und Ausströmen von Flüssigkeit ist zu verstehen, dass unter den Randbedingungen einer Flüssigkeit mit der Viskosität 1 mPa·s (Wasser bei 20°C) und einer Befüllung des Flüssigkeitsspeichers von 80% nach Überführung des Spenders in die Nutzlage weder ein kontinuierliches vollständiges Ausströmen der Flüssigkeit bei gleichzeitigem kontinuierlichem Einströmen von Luft noch ein vollständiges Ausströmen von Flüssigkeit, unterbrochen von kurzen Phasen, in denen Luft durch den Flüssigkeitsauslass eingesogen wird, stattfindet.

Um ausgehend von dieser Situation, in der die Flüssigkeit trotz Nutzlage weitestgehend im Flüssigkeitsspeicher verbleibt, eine definierte Menge der Flüssigkeit auszutragen, ist der bestimmungsgemäße Schieber vorgesehen, der vorzugsweise gegen die Kraft einer Rückstellfeder in den Spender hinein verschoben werden kann, um das Innenvolumen des Flüssigkeitsspeichers bzw. mit ihm verbundener Flüssigkeitsräume zu verringern und somit eine Druckerhöhung im Flüssigkeitsspeicher zu bewirken. Hierdurch wird eine im Wesentlichen durch das vom Schieber verdrängte Volumen beeinflusste Flüssigkeitsmenge durch die Flüssigkeitsaustrittsöffnung abgegeben.

Die Volumenreduzierung, die durch die Bewegung des Schiebers zwischen seiner Hubausgangslage und seiner Hubendlage bewirkt wird, liegt vorzugsweise zwischen 0,5% und 15% des Gesamtvolumens des Flüssigkeitsspeichers bezogen auf eine Positionierung des Schiebers in seiner Hubausgangslage. Besonders bevorzugt sind Gestaltungen, bei denen die Volumenreduzierung im Bereich zwischen 1 % und 12%, insbesondere zwischen 2% und 8%, liegt. So kann beispielsweise ein Spender mit einem Innenvolumen von etwa 100 cm³ zweckmäßigerweise über einen Schieber verfügen, der durch Überführung von der Hubausgangslage in die Hubendlage ein Volumen zwischen 5 cm³ und 10 cm³ verdrängt.

Als besonders vorteilhaft wird eine Gestaltung des erfindungsgemäßen Spenders angesehen, bei der der Spender einen den Flüssigkeitsspeicher bildenden Flaschenkörper mit einem Flaschenhals aufweist und einen in den Flaschenhals eingesetzten Einsatz aufweist, wobei die Flüssigkeitsaustrittsöffnung und der Schieber an diesem Einsatz vorgesehen sind. Diese Gestaltung ist deshalb von besonderem Vorteil, da sie mit in keiner Weise speziell angepassten Flüssigkeitsspeichern in Flaschenform verwendet werden kann. Unter einem Flüssigkeitsspeicher in Flaschenform wird dabei ein Flüssigkeitsspeicher verstanden, der eine Zugangsöffnung an einem dem Flaschenhals bildenden Stutzen aufweist, wobei dieser Stutzen vorzugsweise zumindest abschnittsweise an seiner Innenseite zylindrisch ausgebildet ist und/oder mit einem Innengewinde und/oder Außengewinde versehen ist. An diesem Flaschenhals wird gemäß dieser Weiterbildung der Einsatz befestigt bzw. dieser wird in den Flaschenhals eingeschoben. Dieser Einsatz weist sowohl die Flüssigkeitsaustrittsöffnung als auch den Schieber auf. Der Einsatz verfügt vorzugsweise über einen Abschnitt, insbesondere einen in etwa holzylindrischen Abschnitt, der nach Montage ortsfest am Flaschenhals vorgesehen ist. Demgegenüber ist zumindest der Schieber beweglich, vorzugsweise in Erstreckungsrichtung des Flaschenhalses.

Die ebenfalls am Einsatz vorgesehene Austrittsöffnung kann im montierten Zustand ortsfest zum Flaschenhals vorgesehen sein. Eine alternative Gestaltung sieht vor, dass die Flüssigkeitsaustrittsöffnung am Schieber vorgesehen ist und daher mit diesem gemeinsam bewegt wird. Diese Gestaltung kann in Hinblick auf nachfolgend noch erläuterte Schließeinrichtung von Vorteil sein.

Ein erfindungsgemäßer Spender weist weiterhin eine Schließeinrichtung auf, die bei Positionierung des Schiebers in der Hubausgangslage oder in der Hubendlage den Flüssigkeitsspeicher von der Flüssigkeitsaustrittsöffnung trennt. Dies gestattet es, den Spender zwischen den Nutzungen dicht zu verschließen und somit den Eintritt von Verunreinigungen ebenso zu verhindern wie den Austritt von Flüssigkeit durch Diffusion. Die Schließeinrichtung ist dafür ausgebildet, in Abhängigkeit der Positionierung des Schiebers den Flüssigkeitsspeicher von der Flüssigkeitsaustrittsöffnung zu trennen. Insbesondere kann vorgesehen sein, dass die Schließeinrichtung in der Hubendlage die genannte Trennung vornimmt. Um diese Trennung zuverlässig bei Nichtgebrauch des Spenders herzustellen, ist es besonders von Vorteil, wenn der Spender eine Kappe aufweist, wobei diese beispielsweise als Steckkappe oder Schraubkappe ausgebildet Kappe im aufgesetzten Zustand den Schieber in seine Hubendlage verschiebt, so dass die Schließeinrichtung den Flüssigkeitsspeicher von der Flüssigkeitsaustrittsöffnung trennt. Es ist somit bei dieser Gestaltung vorgesehen, dass der Schieber in seiner Hubausgangslage zumindest partiell exponiert ist, so dass er durch Aufsetzen der Kappe soweit verschoben wird, dass die Schließeinrichtung schließt. Neben der hiermit einhergehenden exponierten Position des Schiebers in seine Hubausgangslage, die eine bequeme Betätigung ermöglicht, wirkt die Aktivierung der Schließeinrichtung mittels der Kappe einem versehentlichen Vergessen der Aktivierung der Schließeinrichtung entgegen.

Eine besonders einfache und vorteilhafte Ausgestaltung einer Schließeinrichtung sieht vor, dass diese eine Ausnehmung aufweist, in die ein Stopfen der Schließeinrichtung in der Hubendlage oder Hubausgangslage des Schiebers in Betätigungsrichtung oder entgegen der Betätigungsrichtung eingeschoben ist. Diese Ausnehmung ist vorzugsweise wie auch der Stopfen zylindrisch ausgebildet, so dass eine zuverlässige Abdichtung bei gleichzeitig recht hoher Toleranz hinsichtlich der Einschubtiefe des Stopfens in die Ausnehmung gegeben ist. Vorzugsweise ist die Ausnehmung ortsfest zum Schieber und dem daran vorgesehenen Flüssigkeitsaustrittskanal vorgesehen. Demgegenüber ist der Stopfen vorzugsweise ortsfest zum Flüssigkeitsspeicher vorgesehen. Insbesondere kann der Stopfen als Endabschnitt eines sich in Betätigungsrichtung oder entgegen der Betätigungsrichtung erstreckenden Zapfens sein, der mit der Ausnehmung fluchtet. Vorzugsweise ist am Grunde der Ausnehmung der Flüssigkeitsaustrittskanal vorgesehen.

Alternativ hierzu kann auch vorgesehen sein, dass die Fließeinrichtung einen in etwa orthogonal zur Bewegungsrichtung des Schiebers ausgerichteten Einlass in den Flüssigkeitsaustrittskanal aufweist, wobei am Schieber eine Schließfläche vorgesehen ist, die den Einlass versperrt, wenn der Schieber in seiner Hubendlage oder Hubausgangslage angeordnet ist. Bei einer solchen Gestaltung wird der Schließzustand somit nicht dadurch hergestellt, dass ein Stopfen in eine Ausnehmung der Schließeinrichtung einfährt. Stattdessen wird der Zugang zum Flüssigkeitsaustrittskanal überdeckt, wenn der Schieber in seiner Hubendlage angeordnet ist.

Eine einfache Ausgestaltung des erfindungsgemäßen Spenders sieht vor, dass der Schieber stets von einer definierten Hubausgangslage bis in eine definierte Hubendlage, in der gegebenenfalls ein Austragende durch die Schließeinrichtung bewirkt wird, verlagerbar ist, so dass hierdurch ein vorgegebenes Volumen verdrängt wird. Es kann jedoch von Vorteil sein, wenn zusätzlich eine Einstelleinrichtung vorgesehen ist, mittels derer der Hubweg des Schiebers reduziert werden kann, so dass der Schieber in Abhängigkeit der Einstellung von der Ausgangsstellung lediglich bis in eine Zwischenlage verschiebbar ist, wobei die Einstelleinrichtung vorzugsweise für eine Reduzierung des Hubs durch eine Drehbewegung des Schiebers oder eine Drehbewegung eines um eine zur Betätigungsrichtung parallele Achse drehbeweglichen Einstellgliedes ausgebildet ist.

Die Einstelleinrichtung gestattet es somit, kleinere Volumina als das Maximalvolumen gezielt abzugeben, ohne hierfür als Bediener die Hubbewegung des Schiebers willentlich und an nicht genau definierter Stelle abbrechen zu müssen. Stattdessen wird die Beweglichkeit des Schiebers stufenlos oder in Stufen reduziert. Erreichbar ist dies insbesondere durch am Schieber vorgesehene Anschläge, Nuten oder Stege, die mit Anschlägen, Stegen oder Nuten an einem zum Flüssigkeitsspeicher ortsfesten Abschnitt dahingehend zusammenwirken, dass eine Verschiebung des Schiebers lediglich möglich ist, bis eine in Abhängigkeit der Einstellung der Einstelleinrichtung variable Zwischenlage erreicht ist, in der die Anschläge, Stege bzw. Nuten in bewegungslimitierende Kontakt miteinander gelangen. Somit lässt sich die Dosierung beispielsweise verschieden für einen Erwachsenen oder ein Kind einstellen.

Die einfachste Form der Einstellbarkeit ist dabei zu erreichen, wenn der Schieber drehbeweglich ausgebildet ist. Er kann somit beispielsweise einen von mehreren vorgesehenen Stegen oder Anschlägen, die sich voneinander durch ihre Erstreckung oder Anordnung in Betätigungsrichtung unterscheiden, in eine Drehstellung bringen, in der dieser Steg die Hubbeweglichkeit des Schiebers begrenzt. Statt des Schiebers selbst könnte auch ein separater und gegenüber dem Schieber sowie dem Flüssigkeitsspeicher beweglicher Einstellabschnitt vorgesehen sein, der vorzugsweise ebenfalls drehbeweglich ist.

Vorzugsweise weist der Spender weiterhin eine Sperreinrichtung auf, mittels derer der Schieber in einer Sperrlage, die vorzugsweise der Hubausgangslage entspricht, arretiert werden kann. Eine solche Sperreinrichtung kann insbesondere als Kindersicherung agieren. Sie kann mit der zuvor beschriebenen Einstelleinrichtung gemeinsam ausgebildet sein. So kann beispielsweise ein Steg oder eine Nut der Einstelleinrichtung dem Sperrzustand zugewiesen sein und so dimensioniert und/oder angeordnet sein, dass keine oder nur eine unwesentliche Hubbeweglichkeit des Schiebers verbleibt.

Insbesondere zur Ausgestaltung der Sperreinrichtung als kindergesicherte Sperreinrichtung ist es von Vorteil, wenn eine über die Drehbewegung des Schiebers oder eines davon getrennten Abschnitts hinausgehende Bewegung zum Endsperren erforderlich ist. Diese könnte beispielsweise in einer axialen Verlagerung eines zusätzlich vorgesehenen Sperrrings liegen.

Bei einer Weiterbildung der Erfindung ist vorgesehen, dass der Flüssigkeitsspeicher mit der Umgebungsatmosphäre ausschließlich über die Austrittsöffnung verbunden ist. Somit ist demnach kein separater Belüftungskanal vorgesehen. Hierdurch wird erreicht, dass der bei Rücküberführung des Schiebers in seine Hubausgangslage erzeugte Unterdruck im Flüssigkeitsspeicher eine Rücksaugung der Flüssigkeit aus dem Austrittskanal bewirkt. Ein Nachtropfen wird somit unterbunden.

Weiterhin ist es von Vorteil, wenn der Flüssigkeitsaustrittskanal eine sich aufweitende Formgebung aufweist. Er wirkt somit als Diffusor und vermindert die Strömungsgeschwindigkeit der austretenden Flüssigkeit. Dies ist besonders bei Flüssigkeiten, die in Tropfenform abgegeben werden sollen, von Vorteil. Die ungewollte Ausbildung eines Sprühstrahls wird verhindert.

### Kurzbeschreibung der Zeichnungen

Weitere Vorteile und Aspekte der Erfindung ergeben sich außer aus den Ansprüchen auch aus der nachfolgenden Beschreibung zweier bevorzugter Ausführungsbeispiele der Erfindung, welche anhand der Figuren erläutert werden. Dabei zeigen:
- Figuren 1 und 1a bis 1c: eine erste Ausführungsform eines erfindungsgemäßen Spenders,
- Figuren 1d und 1e: ein Austragvorgang des Spenders gemäß der Figuren 1 bis 1d,
- Figuren 2, 2a, 2b: eine zweite Ausführungsform eines erfindungsgemäßen Spenders und
- Figur 3: eine Variante zur zweiten Ausführungsform eines erfindungsgemäßen Spenders.

### Detaillierte Beschreibung der Ausführungsbeispiele

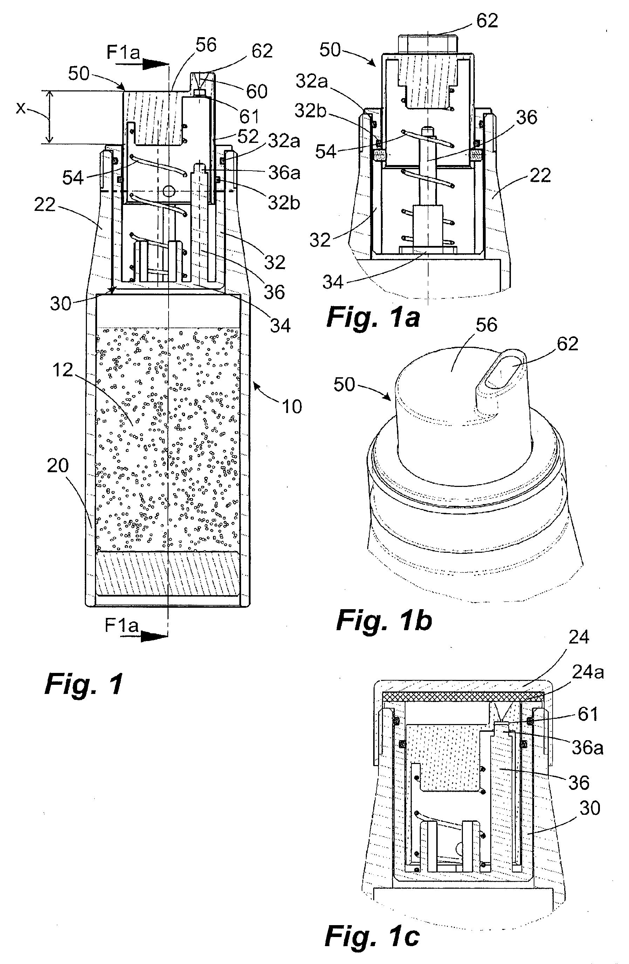

Die Figuren 1 sowie 1a bis 1 c zeigen eine erste Ausführungsform eines erfindungsgemäßen Spenders.

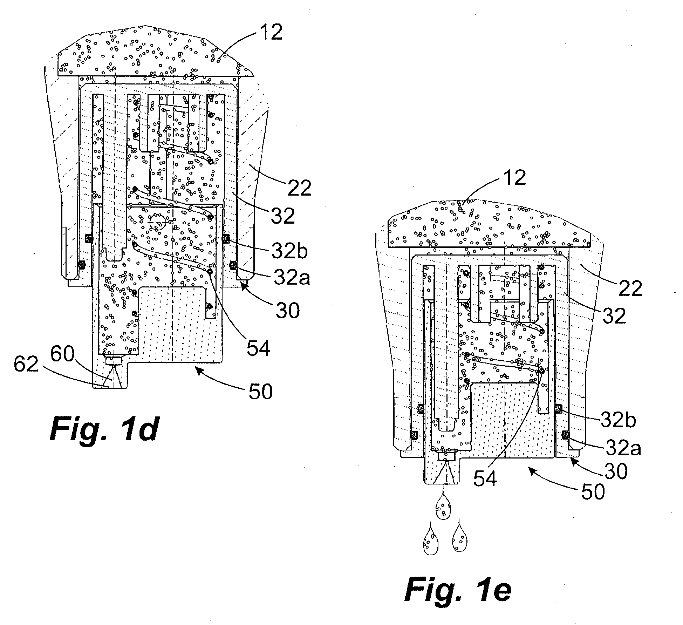

Dieser Spender 10 weist einen Flüssigkeitsspeicher 20 auf, der flaschenartig ausgebildet ist. In seinen Flaschenhals 22 ist ein Einsatz 30 eingesetzt. Dieser Einsatz 30 verfügt über ein Gehäuse 32, mit dessen Außenseite er, abgedichtet durch einen O-Ring 32, an der Innenseite des Flaschenhalses 22 anliegt. Der Innenraum des Gehäuses 32 ist in Richtung des im Spender enthaltenen Mediums 12 im Flüssigkeitsspeicher 20 nicht isoliert. Wie sich aus der Figur 1 a ergibt, kann die Flüssigkeit an einem Steg 34 des Gehäuses 32 vorbei bei entsprechender Ausrichtung des Spenders 10 ungehindert in den Einsatz 30 einströmen.

Im Gehäuse 32 des Einsatzes 30 ist ein Schieber 50 vorgesehen, der durch eine Mantelfläche 52 gegenüber einer Innenfläche des Gehäuses 32 geführt ist. Zur Flüssigkeitsabdichtung ist auch hier ein O-Ring 32b vorgesehen. Der Schieber 50 ist mittels einer sich am Steg 34 des Gehäuses 32 abstützenden Feder 54 permanent nach außen kraftbeaufschlagt. Am Schieber 50 ist weiterhin auch ein in einer Austrittsöffnung 62 mündender Flüssigkeitsaustrittskanal 60 vorgesehen. Benachbart zur Austrittsöffnung 62 ist am Schieber eine Handhabungsfläche 56 vorgesehen, mittels derer der Schieber 50 manuell gegen die Kraft der Feder 54 in Richtung des Flüssigkeitsspeichers 20 verlagert werden kann.

Das Innenvolumen des Spenders 10 einschließlich des Innenvolumens des Einsatzes 30 in Zustand der Figur 1 beträgt etwa 100 cm³. Durch eine manuell verursachte Verlagerung des Schiebers 50 in Richtung des Pfeils 2 um die hierfür vorgesehene Strecke x von etwa 13 mm kann das Innenvolumen um etwa 5 % verringert werden.

Wie Figur 1c zeigt, ist auch eine darüber hinaus gehende Verlagerung des Schiebers 50 gegenüber dem Gehäuse 30 um weitere etwa 7 mm möglich, welche beim Aufsetzen einer Kappe 24 erfolgt. Diese Kappe 24 mit einer darin eingelegten Dichtfläche 24a gestattet es, durch Aufsetzen der Kappe den Schieber 50 soweit nach innen zu verlagern, dass ein Stiftende 36a eines Stiftes 36 in eine den Eintrittsbereich des Flüssigkeitsaustrittskanals 60 bildende Vertiefung 61 einfährt und dadurch eine Kontaminationssperre bildet.

Die bestimmungsgemäße Nutzung des Spenders der Figuren 1 und 1 a bis 1 c ist in den Figuren 1d und 1e erläutert.

Der Spender wird bestimmungsgemäß in einer Überkopflage verwendet, bei der die Austrittsöffnung 62 nach unten weist und somit unterhalb des Flüssigkeitsspiegels der Flüssigkeit 12 angeordnet ist. Figur 1d verdeutlicht den Zustand nach Kippen des Spenders. Da zwischen dem Gehäuse 32 des Einsatzes 30 und dem Flüssigkeitsspeicher 20 keine flüssigkeitstrennenden Vorrichtungen wie Ventile oder dergleichen vorgesehen sind, strömt die Flüssigkeit 12 bei dem Übergang in die Ausrichtung der Figur 1d aufgrund ihrer Gewichtskraft in den Einsatz 30 hinein. Es kommt unmittelbar zum Austrag einer geringen Menge der Flüssigkeit 12, da an der Austrittsöffnung 62 keinerlei Ventile oder dergleichen vorgesehen sind. Dieser Austrag endet jedoch recht schnell, nämlich sobald sich im Flüssigkeitsbehälter 20 ein Unterdruck gebildet hat, der mit der Gewichtskraft der Flüssigkeit 12 im Gleichgewicht steht.

Ausgehend von diesem Zustand wird durch Kraftbeaufschlagung der Handhabungsfläche 56 der Schieber 50 in Richtung des Flüssigkeitsspeichers 20 eingeschoben. Hierdurch wird das Innenvolumen des Spenders 10 um etwa 5% vermindert. Es kommt zu einem Druckanstieg und damit zu einem Austragvorgang von Flüssigkeit durch die Austrittsöffnung 62. Anders als bei üblichen Spendern mit Kolbenpumpe wird dabei nicht ein in einer Pumpkammer isolierter Flüssigkeitsteil vollständig oder weitgehend vollständig ausgetragen, sondern der Spenderinhalt in seiner Gesamtheit druckbeaufschlagt.

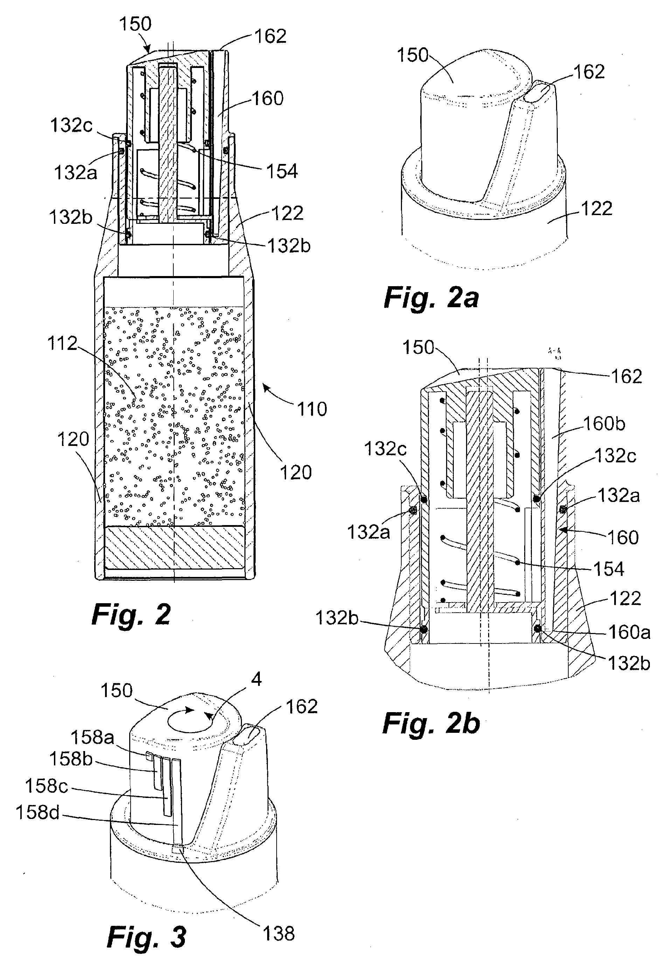

Die Figuren 2, 2a und 2b zeigen eine verwandte Ausgestaltung eines Spenders. Dieser Spender 110 weist ebenfalls eine flaschenähnliche Form mit einem Flüssigkeitsspeicher 120 und einem Flaschenhals 122 auf. In den Flaschenhals 122 ist wiederum ein Einsatz 130 mit einem Gehäuse 132 eingesetzt, welches zum Flaschenhals 122 im Betrieb stets ortsfest verbleibt. Auch bei dieser Gestaltung ist wiederum ein Schieber 150 vorgesehen, der verlagert werden kann, um das Innenvolumen des Spenders 110 zu verringern, vorliegend um ebenfalls 5%. Die sich daraus ergebende Funktionsweise ist somit mit der des Spenders der Figuren 1a bis 1e weitgehend vergleichbar. Ein Unterschied liegt darin, dass beim Spender gemäß der Figuren 2, 2a, 2b die Austrittsöffnung 162 nicht unmittelbar am Schieber 150 vorgesehen ist, sondern am Gehäuse 132 des Einsatzes 130 vorgesehen ist und somit zu diesem stets ortsfest verbleibt. Um dennoch ein Verschließen des Flüssigkeitsaustrittskanals 160 durch den Schieber 150 in dessen Ausgangsposition zu erreichen, ist ein Einlassabschnitt 160a des Flüssigkeitsaustrittskanals 160 nicht axial, sonder radial ausgerichtet. In der in Figur 2 und 2b dargestellten Hubausgangslage liegt ein zwischen dem Gehäuse 132 und dem Schieber 150 angeordneter O-Ring 132b unmittelbar über diesem Kanalabschnitt 160a und verschließt diesen somit.

Auch die Gestaltung des sich an den Abschnitt 160a anschließenden Hauptabschnitt 160b des Flüssigkeitsaustrittskanals 162 weist eine Besonderheit auf. Dieser Kanal verfügt über einen sich aufweitenden Querschnitt. Es wurde festgestellt, dass der Neigung der Flüssigkeit, in Form eines ungewünschten Strahls auszutreten, durch diese Aufweitung entgegengewirkt werden kann.

Figur 3 zeigt eine Variante zur Ausführungsform der Figuren 2, 2a und 2c. Wie in Figur 3 zu ersehen ist, sind an einer Außenseite des Schiebers 150 insgesamt vier Stege 158a bis 158d vorgesehen. Zum Zusammenwirken mit diesen Stegen 158a bis 158d ist in Figur 3 nur in gestrichelt angedeuteter Weise an der Innenseite des Gehäuses 132 ein Vorsprung 138 vorgesehen, der eine Begrenzung darstellt, an der der jeweils mit dem fluchtend des Stegs 158a bis 158d nicht vorbeibewegt werden kann. Der Schieber 150 ist bei dieser Ausgestaltung der Figur 3 in der durch den Pfeil 4 verdeutlichten Weise begrenzt drehbeweglich, so dass eingestellt werden kann, welcher der Stege 158a bis 158d mit dem Anschlag 134 fluchtet. Die Drehbeweglichkeit ist vorzugsweise durch nicht dargestellte Anschläge begrenzt und es sind vorzugsweise Rastmittel oder dergleichen vorgesehen, durch die haptisch erfassbar ist, wann einer der Stege 158a-158d mit dem Anschlag 134 fluchtet.

Wenn der Anschlag 134 mit dem ersten Steg 158a fluchtet, ist eine vollständige oder fast vollständige Hubbewegung des Schiebers 150 möglich. Durch Verdrehen des Schiebers 150 kann unter Nutzung der Stege 158b und 158c der Hub auf etwa 2/3 beziehungsweise 1/3 des Gesamthubs verringert werden. Wenn in der in Figur 3 dargestellten Art und Weise der Steg 158a mit dem Anschlag 134 fluchtet, ist die Hubbeweglichkeit des Schiebers 150 nahezu vollständig eingeschränkt. Der in Figur 3 dargestellte Zustand stellt daher einen gesperrten Zustand dar.

Eine vergleichbare Einstellmöglichkeit, um gezielt eine verminderte Menge der Flüssigkeit ausbringen zu können, kann auch bei der Ausgestaltung gemäß der Figuren 1, 1a bis 1e vorgesehen sein. Aufgrund der exzentrischen Anordnung des Stiftes 36 wäre hier jedoch ein anderer Aufbau zu wählen. So könnte beispielsweise zwischen dem Gehäuse 132 und dem Schieber 150 ein hülsenartiges Zwischenelement vorgesehen sein, welches drehbeweglich gegenüber dem Gehäuse 32 ist und welches daher die rotative Verstellung von daran vorgesehenen den Hub begrenzenden Anschlägen, Stegen oder Nuten gestattet. Da die Funktionsweise eines solchen Einstellrings für Kinder nicht einfach zu erfassen ist, würde eine solche Gestaltung gleichzeitig auch eine Kindersicherung darstellen.

## Patentansprüche

1. Spender (10; 110) zum Austragen von Flüssigkeiten mit
- einem Flüssigkeitsspeicher (20; 120) zur Aufnahme der Flüssigkeit (12; 112) vor dem Austrag und
- einem zu einer Flüssigkeitsaustrittsöffnung (62; 162) führenden Flüssigkeitsaustrittskanal (60; 160, 160a, 160b), durch den der Flüssigkeitsspeicher (20; 120) mit einer Umgebungsatmosphäre verbunden ist,
wobei
- der Spender (10; 110) zur Benutzung in einer Nutzlage ausgebildet ist, in der die Flüssigkeitsaustrittsöffnung (60; 160) unterhalb des Flüssigkeitsspeichers (20; 120) angeordnet ist, so dass die Flüssigkeit (12; 112) durch ihre Gewichtskraft in Richtung der Flüssigkeitsaustrittsöffnung (62; 162) fließt und
- der Flüssigkeitsaustrittskanal (60; 160) derart ausgebildet ist, dass er zumindest in der Nutzlage nicht gleichzeitig ein Eintreten von Luft in den Flüssigkeitsspeicher (20; 120) und ein Austreten von Flüssigkeit (12, 112) in die Umgebungsatmosphäre gestattet,
- wobei ein in einer Betätigungsrichtung manuell von einer Hubausgangslage bis in eine Hubendlage einschiebbarer Schieber (50; 150) vorgesehen ist, durch dessen Betätigung eine Reduzierung des Flüssigkeitsspeichers oder mit ihm verbundener Flüssigkeitsräume des Spenders (10; 110) und somit eine Druckerhöhung im Flüssigkeitsspeicher und damit ein Flüssigkeitsaustrag bewirkt werden kann
**dadurch gekennzeichnet, dass**
eine Schließeinrichtung (36, 36a; 162b, 132b) vorgesehen ist, die bei Positionierung des Schiebers (50; 150) in der Hubausgangslage und/oder in der Hubendlage den Flüssigkeitsspeicher (20; 120) von der Flüssigkeitsaustrittsöffnung (60; 160) trennt.

2. Spender nach Anspruch 1,
**dadurch gekennzeichnet, dass**
der Spender (10)
- einen den Flüssigkeitsspeicher (20) bildenden Flaschenkörper mit einem Flaschenhals (22) aufweist und
- einen in den Flaschenhals (22) eingesetzten Einsatz (30) aufweist, wobei die Austrittsöffnung (62) und der Schieber (50) am Einsatz (30) vorgesehen sind.

3. Spender nach Anspruch 2,
**dadurch gekennzeichnet, dass**
die Flüssigkeitsaustrittsöffnung (62) am Schieber (50) vorgesehen ist und mit diesem gemeinsam bewegt wird.

4. Spender nach einem der vorstehenden Ansprüche,
**dadurch gekennzeichnet, dass**
der Spender (10) eine Kappe (24) aufweist, wobei diese Kappe im aufgesetzten Zustand den Schieber (50) in seine Hubendlage verschiebt, so dass die Schließeinrichtung (36, 26a) den Flüssigkeitsspeicher von der Flüssigkeitsaustrittsöffnung trennt.

5. Spender nach Anspruch 4,
**dadurch gekennzeichnet, dass**
die Schließeinrichtung eine Ausnehmung (61) aufweist, in die ein Stopfen (36a) der Schließeinrichtung in der Hubendlage oder der Hubausgangslage des Schiebers (50) in Betätigungsrichtung oder entgegen der Betätigungsrichtung eingeschoben ist, wobei der Stopfen (36a) vorzugsweise ortsfest zum Flüssigkeitsspeicher (20) und die Ausnehmung (61) vorzugsweise ortsfest zum Schieber (50) vorgesehen ist.

6. Spender nach einem der Ansprüche 1 bis 4,
**dadurch gekennzeichnet, dass**
die Schließeinrichtung (132b, 160a) einen in etwa orthogonal zur Bewegungsrichtung des Schiebers ausgerichteten Einlass (160a) in den Flüssigkeitsaustrittskanal (160) aufweist und am Schieber eine Schließfläche (132b) vorgesehen ist, die den Einlass versperrt, wenn der Schieber in seiner Hubendlage oder in seiner Hubausgangslage angeordnet ist.

7. Spender nach einem der vorstehenden Ansprüche,
**dadurch gekennzeichnet, dass**
eine Einstelleinrichtung (158a-d, 138) vorgesehen ist, mittels derer der Hubweg des Schiebers (150) reduziert werden kann, so dass der Schieber (150) in Abhängigkeit der Einstellung von der Hubausgangslage lediglich bis in eine Zwischenlage verschiebbar ist, wobei die Einstelleinrichtung (158a-d, 138) vorzugsweise für eine Reduzierung des Hubwegs durch eine Drehbewegung des Schiebers (150) oder eine Drehbewegung eines um eine zur Betätigungsrichtung parallele Achse drehbeweglichen Einstellgliedes ausgebildet ist.

8. Spender nach einem der vorstehenden Ansprüche,
**dadurch gekennzeichnet, dass**
eine Sperreinrichtung (158d, 138) vorgesehen ist, mittels derer der Schieber (150) in einer Sperrlage, die vorzugsweise der Hubausgangslage entspricht, arretiert werden kann.

9. Spender nach einem der vorstehenden Ansprüche,
**dadurch gekennzeichnet, dass**
der Flüssigkeitsspeicher (20; 120) mit der Umgebungsatmosphäre ausschließlich über die Austrittsöffnung (62; 162) verbunden ist.

10. Spender nach einem der vorstehenden Ansprüche,
**dadurch gekennzeichnet, dass**
der Flüssigkeitsaustrittskanal (60; 160) eine sich aufweitende Formgebung aufweist.

## Claims

1. Dispenser (10; 110) for delivering liquids, having
- a liquid store (20; 120) for holding the liquid (12; 112) prior to delivery, and
- a liquid outlet duct (60; 160, 160a, 160b) which leads to a liquid outlet opening (62; 162) and by which the liquid store (20; 120) is connected to a surrounding atmosphere,
wherein
- the dispenser (10; 110) is configured for use in a use position in which the liquid outlet opening (60; 160) is arranged beneath the liquid store (20; 120) such that the liquid (12; 112) flows under its weight force in the direction of the liquid outlet opening (62; 162), and
- the liquid outlet duct (60; 160) is configured such that, at least in the use position, it does not simultaneously allow air to pass into the liquid store (20; 120) and liquid (12, 112) to pass out into the surrounding atmosphere,
- wherein provision is made of a slider (50; 150) which is pushable manually in an actuating direction from a travel starting position into a travel end position, it being possible, by way of the actuation of said slider (50; 150), to reduce the size of the liquid store or liquid spaces of the dispenser (10; 110) that are connected thereto and thus to increase the pressure in the liquid store and thus to effect liquid delivery,
**characterized in that**
provision is made of a closing device (36, 36a; 162b, 132b) which, when the slider (50; 150) is positioned in the travel starting position and/or in the travel end position, separates the liquid store (20; 120) from the liquid outlet opening (60; 160).

2. Dispenser according to Claim 1,
**characterized in that**
the dispenser (10)
- has a bottle body, forming the liquid store (20), with a bottle neck (22), and
- has an insert (30) inserted into the bottle neck (22), wherein the outlet opening (62) and the slider (50) are provided on the insert (30).

3. Dispenser according to Claim 2,
**characterized in that**
the liquid outlet opening (62) is provided on the slider (50) and is moved jointly therewith.

4. Dispenser according to one of the preceding claims,
**characterized in that**
the dispenser (10) has a cap (24), wherein, in its fitted state, this cap displaces the slider (50) into its travel end position such that the closing device (36, 26a) separates the liquid store from the liquid outlet opening.

5. Dispenser according to Claim 4,
**characterized in that**
the closing device has a recess (61) into which a plug (36a) of the closing device is pushed in the actuating direction or counter to the actuating direction in the travel end position or the travel starting position of the slider (50), wherein the plug (36a) is provided preferably in a fixed position with respect to the liquid store (20) and the cutout (61) is provided preferably in a fixed position with respect to the slider (50).

6. Dispenser according to one of Claims 1 to 4,
**characterized in that**
the closing device (132b, 160a) has an inlet (160a) into the liquid outlet duct (160), said inlet (160a) being oriented approximately orthogonally to the direction of movement of the slider, and a closing face (132b) is provided on the slider, said closing face (132b) blocking the inlet when the slider is arranged in its travel end position or in its travel starting position.

7. Dispenser according to one of the preceding claims,
**characterized in that**
provision is made of a setting device (158a-d, 138) by means of which the travel path of the slider (150) can be reduced such that the slider (150) is merely displaceable into an intermediate position, depending on the setting of the travel starting position, wherein the setting device (158a-d, 138) is preferably configured to reduce the travel path by way of a rotary movement of the slider (150) or a rotary movement of a setting member that is rotatable about an axis parallel to the actuating direction.

8. Dispenser according to one of the preceding claims,
**characterized in that**
provision is made of a blocking device (158d, 138) by means of which the slider (150) can be locked in a blocked position which preferably corresponds to the travel starting position.

9. Dispenser according to one of the preceding claims,
**characterized in that**
the liquid store (20; 120) is connected to the surrounding atmosphere exclusively via the outlet opening (62; 162).

10. Dispenser according to one of the preceding claims,
**characterized in that**
the liquid outlet duct (60; 160) has a shape that widens.

## Revendications

1. Dispositif distributeur (10; 110) pour décharger des liquides, avec
- un réservoir de liquide (20; 120) destiné à contenir le liquide (12; 112) avant la décharge, et
- un canal de sortie de liquide (60; 160, 160a, 160b) conduisant à un orifice de sortie de liquide (62; 162), par lequel le réservoir de liquide (20; 120) est relié à l'atmosphère ambiante,
dans lequel
- le dispositif distributeur (10; 110) est configuré pour être utilisé dans une position d'utilisation, dans laquelle l'orifice de sortie de liquide (60; 160) est disposé en dessous du réservoir de liquide (20; 120), de telle manière que le liquide (12; 112) s'écoule sous l'action de son poids en direction de l'orifice de sortie de liquide (62; 162), et
- le canal de sortie de liquide (60; 160) est configuré de telle manière que, au moins dans sa position d'utilisation, il ne permette pas simultanément une entrée d'air dans le réservoir de liquide (20; 120) et une sortie de liquide (12, 112) dans l'atmosphère ambiante,
- dans lequel il est prévu un bouchon coulissant (50; 150), pouvant être enfoncé à la main dans une direction d'actionnement depuis une position de début de course jusqu'à une position de fin de course, dont l'actionnement permet de provoquer une diminution du réservoir de liquide ou de chambres de liquide reliées à celui-ci du dispositif distributeur (10; 110) et ainsi une augmentation de pression dans le réservoir de liquide et dès lors une décharge de liquide,
**caractérisé en ce qu'**il est prévu un dispositif de fermeture (36, 36a; 162b, 132b) qui, en cas de positionnement du bouchon coulissant (50; 150) dans la position de début de course et/ou dans la position de fin de course, sépare le réservoir de liquide (20; 120) de l'orifice de sortie de liquide (60; 160).

2. Dispositif distributeur selon la revendication 1, **caractérisé en ce que** le dispositif distributeur (10)
- présente un corps de flacon avec un col de flacon (22) formant le réservoir de liquide (20), et
- présente une pièce rapportée (30) insérée dans le col de flacon (22), dans lequel l'orifice de sortie (62) et le bouchon coulissant (50) sont prévus sur la pièce rapportée (30).

3. Dispositif distributeur selon la revendication 2, **caractérisé en ce que** l'orifice de sortie de liquide (62) est prévu sur le bouchon coulissant (50) et est déplacé de concert avec celui-ci.

4. Dispositif distributeur selon l'une quelconque des revendications précédentes, **caractérisé en ce que** le dispositif distributeur (10) présente un capuchon (24), dans lequel ce capuchon à l'état mis en place déplace le bouchon coulissant (50) dans sa position de fin de course, de telle manière que le dispositif de fermeture (36, 26a) sépare le réservoir de liquide de l'orifice de sortie de liquide.

5. Dispositif distributeur selon la revendication 4, **caractérisé en ce que** le dispositif de fermeture présente un évidement (61), dans lequel un tampon (36a) du dispositif de fermeture est inséré, dans la position de fin de course ou dans la position de début de course du bouchon coulissant (50), dans la direction d'actionnement ou à l'encontre de la direction d'actionnement, dans lequel le tampon (36a) est prévu de préférence de façon stationnaire par rapport au réservoir de liquide (20) et l'évidement (61) est prévu de préférence de façon stationnaire par rapport au bouchon coulissant (50).

6. Dispositif distributeur selon l'une quelconque des revendications 1 à 4, **caractérisé en ce que** le dispositif de fermeture (132a, 160a) présente une entrée (160a) dans le canal de sortie de liquide (160), orientée de façon sensiblement orthogonale à la direction de mouvement du bouchon coulissant et il est prévu sur le bouchon coulissant une face de fermeture (132b), qui obture l'entrée lorsque le bouchon coulissant est disposé dans sa position de fin de course ou dans sa position de début de course.

7. Dispositif distributeur selon l'une quelconque des revendications précédentes, **caractérisé en ce qu'**il est prévu un dispositif de réglage (158a-d, 138), au moyen duquel la course du bouchon coulissant (150) peut être réduite, de telle manière que le bouchon coulissant (150) ne soit déplaçable que jusqu'à une position intermédiaire, en fonction du réglage de la position de début de course, dans lequel le dispositif de réglage (158a-d, 138) est réalisé de préférence pour une réduction de la course par un mouvement de rotation du bouchon coulissant (150) ou un mouvement de rotation d'un organe de réglage mobile en rotation autour d'un axe parallèle à la direction d'actionnement.

8. Dispositif distributeur selon l'une quelconque des revendications précédentes, **caractérisé en ce qu'**il est prévu un dispositif de blocage (158d, 138), au moyen duquel le bouchon coulissant (150) peut être bloqué dans une position de blocage, qui correspond de préférence à la position de début de course.

9. Dispositif distributeur selon l'une quelconque des revendications précédentes, **caractérisé en ce que** le réservoir de liquide (20, 120) est raccordé à l'atmosphère ambiante exclusivement par l'orifice de sortie (62; 162).

10. Dispositif distributeur selon l'une quelconque des revendications précédentes, **caractérisé en ce que** le canal de sortie de liquide (60; 160) présente une forme qui s'évase.
